# EUROPEAN PATENT APPLICATION

(11) **EP 1 587 327 A2**
(43) Date of publication of application: **19.10.2005**
(21) Application number: 05102726.6
(22) Date of filing: 07.04.2005
(51) Int. Cl.: H04N 7/26

(54) **Video transcoding**

(30) Priority: 15.04.2004 US 826974
(71) Applicant: MICROSOFT CORPORATION, Redmond, WA 98052 (US)
(72) Inventor: Yogeshwar, Jay, Redmond, WA 98052 (US); Mukerjee, Kunal, Redmond, WA 98052 (US); Green, Robert D., Redmond, WA 98052 (US)
(74) Representative: Grünecker, Kinkeldey, Stockmair & Schwanhäusser Anwaltssozietät

(57) **Abstract**

High-fidelity transcoding techniques are described. For example, a video transcoder obtains re-coding data set elements for source format compressed video and uses the elements for coding decisions and/or equivalent parameters when compressing the video in a target format. This allows syntax elements and coding decisions to be maintained across the two formats, including picture types, intra/inter macroblock coding types, field/frame coding decisions, and/or quantization levels. This helps the transcoder match quality in the compressed video between the source and target formats, reducing transcoding losses. At the same time, the transcoder gives the target format encoder the freedom to exploit additional compression opportunities to reduce overall bitrate. The transcoder may apply proportional rate control so as to produce output at a constant or relatively constant bitrate.

## Description

### TECHNICAL FIELD

High-fidelity transcoding techniques are described. For example, a video transcoder extracts syntax elements from compressed video in a source format and uses the syntax elements for coding decisions when compressing the video in a target format.

### BACKGROUND

With the introduction of DVDs and video delivery over the Internet, digital video has become commonplace. Engineers use a variety of techniques to process digital video efficiently while still maintaining quality. To understand these techniques, it helps to understand how video information is represented and processed in a computer.

### I. Representation of Video Information in a Computer

A computer processes video information as a series of numbers representing the information. A single number typically represents an intensity value for one picture element ["pixel"] of a picture. Several factors affect the quality of the video information, including sample depth, resolution, and frame rate.

Sample depth (or precision) indicates the range of numbers used to represent a sample. When more values are possible for the sample, quality is higher because the number can capture more subtle variations in intensity. Video with higher resolution tends to look crisper than other video, and video with higher frame rate tends to look smoother than other video. For all of these factors, the tradeoff for high quality is the cost of storing and transmitting the information, as Table 1 shows.

**Table 1:**

| **Bitrates for different quality levels of raw video** | | | |
|---|---|---|---|
| **Bits Per Pixel** | **Resolution** | **Frame Rate** | **Bitrate** |
| 8 (value 0-255) | 160x120 pixels | 7.5 | 1.2 Mbit/s |
| 24 (value 0-16,777,215) | 240x176 pixels | 15 | 15.2 Mbit/s |
| 24 (value 0-16,777,215) | 352×288 pixels | 30 | 73Mbit/s |

High resolution formats such as those used for HDTV use even more bitrate for raw video. Despite the high bitrate, companies and consumers increasingly depend on computers to create, edit, distribute, and play back video content. For this reason, engineers use compression (also called coding or encoding) to reduce the bitrate of digital video. Compression decreases the cost of storing and transmitting information by converting it into a lower bitrate form. Decompression (also called decoding) reconstructs a version of the original information from the compressed form. Two categories of compression are lossless and lossy.

Lossless compression reduces the bitrate of information by removing redundancy. For example, a series of ten red pixels is represented as a code for "red" and the number ten in compression, and the series is perfectly reconstructed in decompression. Lossless compression reduces bitrate at no cost to quality, but can only reduce bitrate up to a certain point. Decreases in bitrate are limited by the complexity of the information. Entropy coding is another term for lossless compression.

In contrast, with lossy compression, quality suffers but decreases in bitrate are more dramatic. For example, a series of ten pixels, each a slightly different shade of red, is approximated as ten pixels with the same "red" color. Lossy compression can reduce bitrate more by removing more quality, but the lost quality cannot be restored. Lossy compression is often used in conjunction with lossless compression - the lossy compression reduces the complexity and quality of the video, which enables greater bitrate reduction in subsequent lossless compression. For example, the series of ten pixels, each a slightly different shade of red, is represented as a code for "red" and the number 10 in compression. In decompression, the original series is reconstructed as ten pixels with the same "red" color.

Various international standards address video compression, decompression, and the syntax of compressed video. These include the various versions of MPEG-1, MPEG-2, MPEG-4, H.261, H.262, H.263, and H.264/AVT/JVT. Aside from these standards, various companies have offered video compression and decompression products. These include the various versions of the Windows Media Video tools from Microsoft Corporation. These standards and products each use a different combination of lossy and lossless compression techniques.

In the past, broadcast and cable industries have adopted various kinds of MPEG-2 (and MPEG-1) for acquisition, contribution, production, and delivery of video content. As a result, there is a large amount of legacy, archived content in MPEG-2 format in particular. As a compression format, however, MPEG-2 is not particularly efficient when compared to more recent formats such as WMV version 9 ["WMV9"]. Increasingly, these industries are attracted to the coding efficiencies of WMV9 and the versatility of WMV9 for broadcast production and distribution workflow applications, such as on-air backup, video on demand delivery to set-top boxes, transmission backhauling, and creation of browse proxies of high-resolution video. The problem for these industries is how to efficiently convert legacy MPEG-2 content into WMV9 for more efficient processing and distribution.

### II. Transcoding

Different devices and end users have different storage and transmission capacities as well as different quality requirements. In addition, different devices and end users can use different compression formats. In general, transcoding converts compressed information of one bitrate, quality, or format to compressed information of another bitrate, quality, or format. Different transcoders use different techniques.

A homogeneous transcoder uses the same format for both decompression and compression during transcoding, for example, converting high bitrate MPEG-2 compressed video to lower bitrate MPEG-2 compressed video. A heterogeneous transcoder uses different formats for decompression and compression, for example, converting MPEG-2 compressed video to H.261 compressed video. For a description of heterogeneous transcoders, see, for example, the article by Shanableh et al., entitled "Transcoding of Video into Different Encoding Formats."

Some transcoders fully decompress compressed information and then fully recompress the information. Naive transcoding simply cascades the decompression and re-compression stages. Other transcoders only partially decompress the compressed information, re-compressing the information that was decompressed and passing other, still compressed elements through as part of the transcoding. The Society of Motion Picture and Television Engineers ["SMPTE"] has produced a standard that specifies information for use in transcoding from MPEG-2 compressed video to MPEG-2 compressed video. This standard lists MPEG-2 syntax elements and related, derived parameters for the purpose of transcoding from MPEG-2 compressed video to MPEG-2 compressed video at the same or different bitrate. *See* SMPTE, "SMPTE 327M-2000 - MPEG-2 Video Recoding Data Set," 9 pp. (January 2000). Partial decompression transcoders typically reuse compressed information to reduce the complexity of the transcoding process, avoiding resource-intensive operations such as motion estimation and coding mode decisions in the second compression.

After decompression, video can be re-sampled, re-quantized, or otherwise processed. While this is sometimes necessary to reduce bitrate or ensure format compatibility, such processing may introduce transcoding loss beyond the loss necessarily associated with the second compression. For example, suppose 73 Mbit/s video is compressed to 4 Mbit/s MPEG-2 video, then transcoded to 2.8 Mbit/s H.261 video. Transcoding losses can make the quality of the transcoded H.261 video worse than the quality of the 73 Mbit/s video if it was directly compressed to 2.8 Mbit/s H.261 video.

Naive transcoding often introduces high transcoding distortion, even when transcoding to the same format. Quality loss per transcoding pass has been estimated to be roughly 1-2 dB (in terms of peak signal to noise ratio ["PSNR"] loss). Concatenated transcoding can result in loss of picture quality with each generation, and video quality may be unacceptable after a few conversions. A loss of 5 dB is common in a broadcast production chain of even mild complexity. Moreover, the repeated quantization processes can lead to an overall re-quantization penalty, above and beyond the sum of the individual quantization penalties.

For more information about partial decompression transcoders, see, for example, the articles: (1) Assuncao et al., "Transcoding of Single-Layer MPEG Video Into Lower Rates"; and (2) Keesman et al., "Transcoding of MPEG Bitstreams." For more information about transcoders that also use syntax elements from compressed information to influence coding decisions in the second compression, see, for example, the articles: (3) Knee, et al., "Seamless Concatenation - A 21^{st} Century Dream"; (4) Sun et al., "Architectures for MPEG Compressed Bitstream Scaling"; and (5) Tudor et al., "Real-Time Transcoding of MPEG-2 Video Bit Streams." For description of transcoders that lower bitrate by changing quantization, see, for example, references (3), (4), and (5), as well as the article: (6) Assuncao et al., "Buffer Analysis and Control in CBR Video Transcoding." For description of rate control in transcoding, see, for example, references (5) and (6).

Whatever the advantages of prior video transcoders, they do not have the advantages of the various different aspects of the present invention. In particular, the references mentioned above focus primarily on homogeneous transcoding solutions, which ignores the need for heterogeneous transcoding solutions. In addition, where the references discuss reuse of compressed information in transcoding, they typically emphasize reuse for the sake of reducing transcoding complexity. A few references describe reuse in terms of reducing quality losses, but do not show how to efficiently reuse information while also exploiting the compression efficiencies of the second compression stage in transcoding. Most of all, to the extent previous video transcoders allow bitrate reduction, quality suffers, and to the extent previous transcoders preserve quality, there is no reduction in bitrate. Previous video transcoders do not transcode in a way that both substantially preserves quality and substantially reduces bitrate.

### SUMMARY

In summary, various strategies for high-fidelity transcoding are described. With these strategies, for example, a video transcoder transcodes video from a source format to a target format in a way that both substantially preserves quality and substantially reduces bitrate. The various strategies can be used in combination or independently.

According to a first strategy, a tool transcodes video from a source format to a target format at the same bitrate or a lower bitrate. The tool decompresses compressed video in the source format and obtains type values for multiple units of the compressed video. The type values may be picture type values, macroblock coding type values, and/or other information. When the tool re-compresses the video, the tool makes some coding decisions based at least in part on the obtained type values, so as to help the tool match quality between the compressed video in the target and source formats. The tool independently makes other coding decisions to make use of the compression efficiencies of the target format to reduce bitrate.

According to a second strategy, a tool decompresses compressed video in one format and obtains quantization levels for the compressed video. When the tool re-compresses the video in another format, the tool quantizes the video to a degree comparable to the obtained quantization levels to reduce differences in quality between the compressed video in the two formats. At the same time, compression efficiencies of the second format substantially reduce bitrate.

According to a third strategy, a tool decompresses compressed video in a first format and re-compresses the video. The tool uses a second format encoder with one-pass variable bitrate encoding, but regulates compression parameters to produce the second format compressed video at a constant or relatively constant bitrate.

These and other features and advantages of the invention will be made apparent from the following detailed description of embodiments that proceeds with reference to the accompanying drawings.

### BRIEF DESCRIPTION OF THE DRAWINGS

Figure 1 is a block diagram of a suitable computing environment in which described embodiments may be implemented.
Figure 2 is a block diagram of a video transcoder in which described embodiments may be implemented.
Figure 3 is a block diagram of a DMO architecture for a transcoder.
Figure 4 is a block diagram of a filter graph that incorporates the transcoder of Figure 3.
Figure 5 is a flowchart showing a technique for obtaining and using re-coding data set elements for source format compressed video in transcoding to a target format.
Figure 6 is a flowchart showing a technique for obtaining and using quantization levels for source format compressed video in transcoding to a target format.
Figure 7 is a flowchart showing a technique for rate control in transcoding.
Figure 8 is a block diagram for a proportional rate control mechanism in one implementation.
Figure 9 is a pseudocode listing for a proportional rate control mechanism in another implementation.

### DETAILED DESCRIPTION

Described embodiments are directed to techniques and tools for high-fidelity transcoding. For example, a video transcoder performs high-fidelity conversion of video from a first lossy compression format to a second lossy compression format. This allows interoperability between the two formats with reduced transcoding losses and substantial preservation of quality. At the same time, the compression efficiencies of the second format result in output bitrates substantially lower than the input bitrates.

A key observation comes from comparing the numbers of bits used on a picture-by-picture basis during naive transcoding. Quality loss in naive transcoding partly results from disparities in the numbers of bits used to compress the same picture in the two different compression formats. When too few bits are used for re-compression of a picture, the risk of additional distortion being introduced increases, and quality loss may affect subsequent pictures. For example, if a picture is used as a reference picture for motion compensation for a subsequent picture, the transcoder must compensate for the loss of quality in the reference picture by spending additional bits encoding the prediction residual for the predicted picture. On the other hand, when too many bits are used for re-compression of a picture, the "quality" that is preserved is well below the thresholds of visibility for human viewers, and hence bits are wasted that might otherwise be used for other pictures. An ongoing bits deficit problem may be created or exacerbated, potentially hurting the quality of subsequent pictures.

Various techniques and tools described herein use information from or about the source format compressed video when determining how to use bits efficiently for re-compression. This information may be obtained or derived during decoding of the source format compressed video, or from another source. Rules in the transcoder define how to use target format syntax elements and make coding decisions based on the source format information. As a result, the quality of the transcoded pictures substantially matches the quality of the source format compressed pictures. The numbers of bits used to compress pictures in the target format roughly track the numbers of bits used to compress the same pictures in the source format, after adjusting for any overall difference in bitrate.

In some embodiments, a transcoder uses information such as source format syntax elements as hints (implemented as transcoding rules) during re-encoding. This allows certain corresponding syntax elements and coding decisions to be maintained across the two compression formats. By not compressing a picture far below its previous quality level, the transcoder decreases the risk of introducing new artifacts (e.g., due to quantization that is too coarse). The transcoder also avoids allocating bits to encode noise or preserve quality below visible thresholds. In areas where the original encoder saved bits with lossy compression, the quality of the transcoding is lowered, since transcoding at higher quality would do little to improve fidelity to the original content, and may instead introduce quantization noise or amplify the quantization noise introduced by the first encoding. Thus, the transcoded video follows the quality and bitrate patterns of the incoming video within a tolerance.

In some embodiments, a transcoder coerces a target format encoder to use picture types (e.g., I, P, or B) from the source format compressed video for corresponding pictures compressed in the target format. This can help the transcoder match quality in the compressed video between the source and target formats, and can also help preserve fast forward, fast reverse, and other access functionality. In some embodiments, a transcoder uses inter/intra macroblock coding types from the source format compressed video when compressing in the target format. Or, a transcoder uses field/frame coding decision information from the source format compressed video. These techniques can also help the transcoder match quality in the compressed video between the source and target formats. At the same time, the transcoder gives the target format encoder the freedom to exploit additional compression opportunities to reduce overall bitrate.

In some embodiments, a transcoder maps the quantization levels of source format compressed video to the target format compressed video. For example, the transcoder maps macroblock layer quantization levels to corresponding macroblocks of the target format compressed video. When the formats are MPEG-2 and WMV9, the transcoder can map MPEG-2 quantization levels to WMV9 macroblocks using the differential quantizer signaling mechanism of WMV9.

In some embodiments, a transcoder applies external, proportional rate control over the one-pass variable bitrate mode of a video encoder, so as to produce output at a constant or relatively constant bitrate. This allows the transcoder to operate in a constant bitrate mode or variable bitrate mode.

In various example implementations, a video transcoder performs high-fidelity conversion of MPEG-2 coded video to WMV9 coded video while reducing bitrate by 20-30% for typical sequences. The transcoder preserves picture and macroblock types and carefully maps quantization levels to curtail transcoding loss. The transcoding is particularly useful to producers and broadcasters of high-quality video, where MPEG-2 has been the dominant format. Other applications relate to transcoding between a format used for one type of consumer device (e.g., MPEG-2 on PC) and another type of consumer device (e.g., WMV9 on laptop).

Alternatively, a transcoder performs conversion other than MPEG-2 to WMV9. For example, the transcoder converts between MPEG-2 and H.264, MPEG-2 and VC-9, or another pair of video formats. Or, the transcoder converts information other than video. A processing tool other than a video transcoder may implement one or more of the techniques.

While various transcoding techniques are described in places herein as part of a single, integrated system, the techniques can be applied separately, potentially in combination with other techniques. Moreover, although operations for the various techniques are described in a particular, sequential order for the sake of presentation, it should be understood that this manner of description encompasses minor rearrangements in the order of operations, unless a particular ordering is required. For example, operations described sequentially may in some cases be rearranged or performed concurrently. Moreover, for the sake of simplicity, flowcharts may not show the various ways in which particular techniques can be used in conjunction with other techniques.

### I. Computing Environment

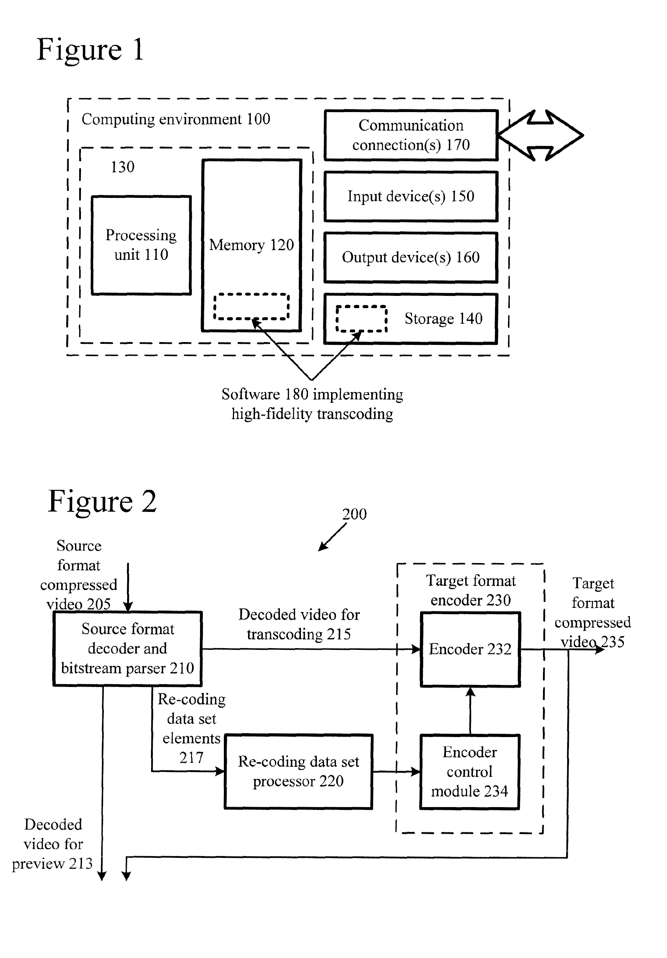

Figure 1 illustrates a generalized example of a suitable computing environment (100) in which described embodiments may be implemented. The computing environment (100) is not intended to suggest any limitation as to scope of use or functionality, as the techniques and tools may be implemented in diverse general-purpose or special-purpose computing environments.

With reference to Figure 1, the computing environment (100) includes at least one processing unit (110) and memory (120). In Figure 1, this most basic configuration (130) is included within a dashed line. The processing unit (110) executes computer-executable instructions and may be a real or a virtual processor. In a multi-processing system, multiple processing units execute computer-executable instructions to increase processing power. The memory (120) may be volatile memory (e.g., registers, cache, RAM), non-volatile memory (e.g., ROM, EEPROM, flash memory, etc.), or some combination of the two. The memory (120) stores software (180) implementing high-fidelity transcoding.

A computing environment may have additional features. In Figure 1, the computing environment (100) includes storage (140), one or more input devices (150), one or more output devices (160), and one or more communication connections (170). An interconnection mechanism (not shown) such as a bus, controller, or network interconnects the components of the computing environment (100). Typically, operating system software (not shown) provides an operating environment for other software executing in the computing environment (100), and coordinates activities of the components of the computing environment (100).

The storage (140) may be removable or non-removable, and includes magnetic disks, magnetic tapes or cassettes, CD-ROMs, CD-RWs, DVDs, or any other medium which can be used to store information and which can be accessed within the computing environment (100). The storage (140) stores instructions for the software (180).

The input device(s) (150) may be a touch input device such as a keyboard, mouse, pen, or trackball, a voice input device, a scanning device, or another device that provides input to the computing environment (100). For audio or video, the input device(s) (150) may be a sound card, video card, TV tuner card, or similar device that accepts audio or video input in analog or digital form, or a CD-ROM or CD-RW that reads audio or video samples into the computing environment (100). The output device(s) (160) may be a display, printer, speaker, CD-writer, or another device that provides output from the computing environment (100).

The communication connection(s) (170) enable communication over a communication medium to another computing entity. The communication medium conveys information such as computer-executable instructions, audio or video input or output, or other data in a modulated data signal. A modulated data signal is a signal that has one or more of its characteristics set or changed in such a manner as to encode information in the signal. By way of example, and not limitation, communication media include wired or wireless techniques implemented with an electrical, optical, RF, infrared, acoustic, or other carrier.

The techniques and tools can be described in the general context of computer-readable media. Computer-readable media are any available media that can be accessed within a computing environment. By way of example, and not limitation, with the computing environment (100), computer-readable media include memory (120), storage (140), communication media, and combinations of any of the above.

The techniques and tools can be described in the general context of computer-executable instructions, such as those included in program modules, being executed in a computing environment on a target real or virtual processor. Generally, program modules include routines, programs, libraries, objects, classes, components, data structures, etc. that perform particular tasks or implement particular abstract data types. The functionality of the program modules may be combined or split between program modules as desired in various embodiments. Computer-executable instructions for program modules may be executed within a local or distributed computing environment.

For the sake of presentation, the detailed description uses terms like "determine," "generate," "adjust," and "apply" to describe computer operations in a computing environment. These terms are high-level abstractions for operations performed by a computer, and should not be confused with acts performed by a human being. The actual computer operations corresponding to these terms vary depending on implementation.

### II. Video Transcoder

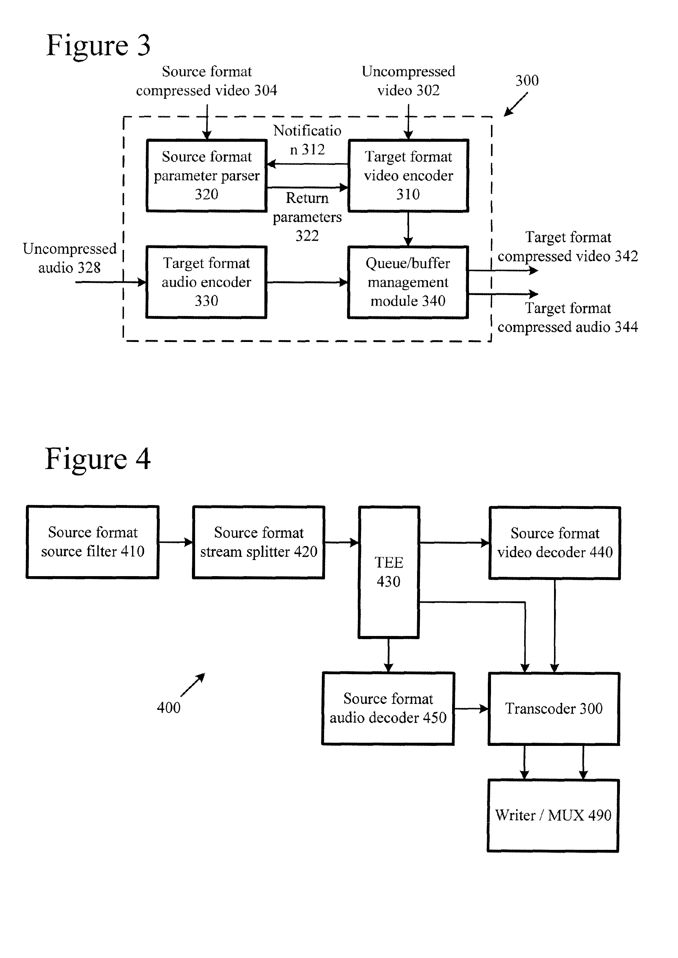

Figure 2 shows a generalized video transcoder (200) in which described embodiments may be implemented. The transcoder (200) of Figure 2 may be implemented as a DirectX Media Object ["DMO"] (300), as shown in Figure 3. The DMO in turn may be incorporated into the system filter graph (400) of Figure 4. This architecture simplifies integration of the transcoder, provides the flexibility to use any of various source format decoders, and simplifies the addition of extra functionality.

### A. Generalized Video Transcoder

The transcoder (200) has various modules, including the source format decoder and bitstream parser (210), the re-coding data set processor (220), and the target format encoder (230). The relationships shown between modules within the transcoder (200) indicate general flows of information in the transcoder (200); other relationships are not shown for the sake of simplicity.

Overall, the transcoder (200) receives video (205) compressed in a source format, decodes it, re-encodes it, and produces video (235) compressed in a target format. For example, the source format is MPEG-2 and the target format is WMV9, but other format pairs are also possible. For additional detail about MPEG-2, see the MPEG-2 standard (also released as the H.262 standard), the disclosure of which is hereby incorporated by reference. For additional detail about WMV9, see U. S. Provisional Patent Application Serial No. 60/488,710, filed July 18, 2003, the disclosure of which is hereby incorporated by reference.

The transcoder (200) processes video pictures, which may be video frames, video fields, or combinations of frames and fields. Decompression and compression in the transcoder (200) are block-based and use color format such as a 4:2:0, in which case each macroblock ["MB"] includes 4 8x8 luminance blocks (at times treated as one 16x16 MB) and two 8x8 chrominance blocks. Alternatively, the compression and decompression are object-based, use a different MB or block format, or otherwise perform operations on sets of pixels of different sizes or configuration.

With reference to Figure 2, the source format decoder and bitstream parser (210) receives the compressed video (205) in the source format. The decoder (210) decodes the video (205), producing decoded video (215) for transcoding. The same or different decoded video may be used as video (213) for preview by the end user. The components of the decoder (210) vary by compression format and implementation, but typically include an entropy decoder, inverse quantizer, inverse frequency transformer, and motion compensator. The decoder (210) fully decompresses the video (205) to produce the video (215) for transcoding.

The bitstream parser (210), which may be integrated with the decoder (210) or separate, extracts a set of data elements (217) to be used in re-coding the video. For example, these elements include picture type, MB intra/inter coding mode, and frame/field decision information. For a description of MPEG-2 syntax elements, see "SMPTE 327M-2000 - MPEG-2 Video Recoding Data Set," the disclosure of which is hereby incorporated by reference. Alternatively, the set of data elements (217) includes other and/or additional elements. The re-coding data set processor (220) processes and packages the extracted elements for use in controlling re-compression.

The target format encoder (230) re-encodes the video (215) according to the target format. The target format encoder (230) itself includes an encoder module (232) that performs the actual compression and an encoder control module (234) for controlling quality and/or rate of the compression. The encoder control module (234) translates elements from the source format video into control signals for the encoder module (232) and equivalent parameters for the target format compressed video. The encoder module (232) produces compressed video (235) in the target format, which may be routed to a target format decoder module for previewing purposes or another module for other feedback purposes. The components of the encoder module (232) vary by compression format and implementation, but typically include an image preprocessor (for sample rate conversions, filtering, etc.), a motion estimator/compensator, frequency transformer, quantizer, and entropy encoder, as well as necessary decoding components.

Particular embodiments of video transcoders may use a variation or supplemented version of the generalized transcoder (200). Depending on implementation and the type of transcoding desired, modules of the transcoder can be added, omitted, split into multiple modules, combined with other modules, and/or replaced with like modules. In alternative embodiments, transcoders with different modules and/or other configurations of modules perform one or more of the described techniques.

### B. Internal Architecture of Transcoder

Figure 3 shows the internal architecture of the DMO (300). Overall, the video modules of the DMO (300) have two input pins and one output pin. The input pins are for uncompressed video (302) and source format (e.g., MPEG-2) compressed video (304), and the output pin is for target format (e.g., WMV9) compressed video (342).

The target format video encoder (310) receives uncompressed video (302) and sends a notification (312) to the source format parameter parser (320) when a picture is ready for compression. In return, the encoder (310) receives information used in making coding decisions. The notification/return protocol may be implemented as callback functions between components or with some other mechanism. Information is extracted a few pictures at a time as the coding progresses, synchronously with the video encoding. Alternatively, the transcoder uses different timing.

The parser (320) receives corresponding source format compressed video (304) and extracts syntax elements from it to obtain information about a video picture in the source video. The parser (320) extracts any or all of the embedded syntax elements and derived elements from the compressed video (304). For example, the parser (320) extracts a subset of the SMPTE MPEG-2 re-coding data set. Alternatively, the parser (320) extracts other and/or additional elements. From the syntax elements, the parser (320) makes coding decisions and parameterizes the syntax elements and coding decisions for delivery as return parameters (322) to the encoder (310). Using the return parameters (322), the encoder (310) produces target format compressed video.

In a separate path, a target format (e.g., WMA9) audio encoder (330) receives uncompressed audio (328) and produces target format compressed audio.

A queue and buffer management module (340) receives the compressed video and compressed audio from the encoders (310, 330) and produces the target format compressed video (342) and target format compressed audio (344) as synchronized output. The queue and buffer management module (340) may include one or more buffers for rate control purposes, and may provide feedback to the encoders (310, 330) to regulate quality and/or rate.

### C. Filter Graph Using Transcoder

Figure 4 shows a filter graph implementation (400) that incorporates the DMO (300) for the transcoder as a filter. Collectively, the system accomplishes transcoding of audio and video, multiplexing of the compressed audio and video, and creation of a valid output format (e.g., ASF) file as the final output.

Transcoding starts with a multiplexed source format (e.g., MPEG-2) file as input. The source format source filter (410) represents the source format video stream as played out from a network stream, file, etc. The source format stream splitter (420) splits the source format stream into compressed audio and compressed video substreams, and passes these to the TEE (430) over a single pin. The TEE (430) passes the information it receives on its input pin to each of its output pins. (The filter that receives the information will use some and ignore the rest.)

The source format video decoder (440) decodes the compressed video sub-stream and produces uncompressed video. The source format (e.g., AES) audio decoder (450) decodes the compressed audio sub-stream and produces uncompressed audio.

The transcoder filter (300) receives the uncompressed video and uncompressed audio as well as the raw output from the TEE (430), which includes the source format compressed video sub-stream. The components of the transcoder filter (300) operate as described above, producing target format (e.g., WMV9) compressed video and target format (e.g., WMA9) compressed audio. The writer/multiplexer (490) combines this compressed information along with header information into an output format file, which is stored and/or transmitted.

While the filter graph (400) may represent a software-only implementation of the transcoder, other implementations use combinations of hardware, firmware, and software for transcoding, with the expected benefit of faster transcoding.

### III. Preserving Type Syntax Elements

In some embodiments, a video transcoder preserves picture types, MB coding types, frame/field coding decision information, and/or other information during transcoding from a source format to a target format. The transcoder uses the information for coding decisions and/or setting equivalent parameters in the target format compression. This helps the transcoder match the quality of the source format compressed video. At the same time, the transcoder gives the target format encoder the freedom to make various other coding decisions for the video, so as to exploit compression efficiencies and reduce overall bitrate.

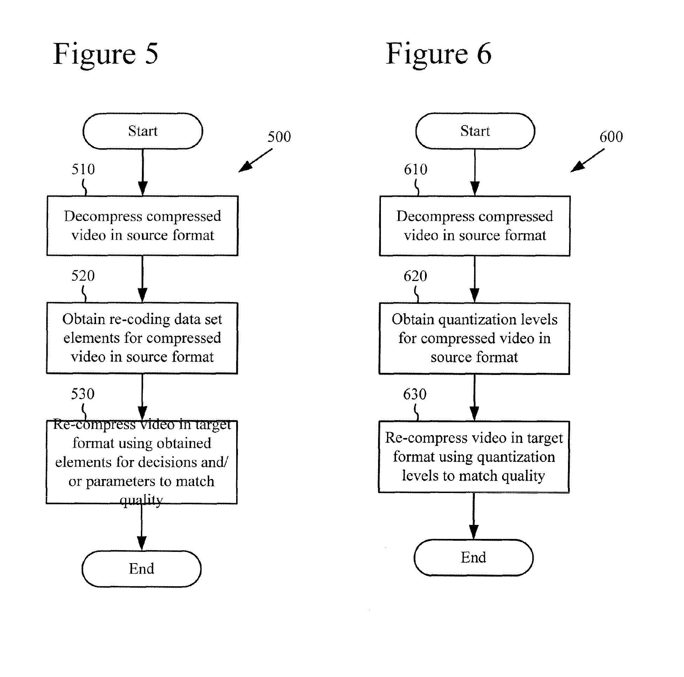

Figure 5 shows a technique (500) for obtaining and using re-coding data set elements for source format compressed video during transcoding. A source format decoder decompresses (510) the source format compressed video, producing uncompressed video. For example, the decompression is full decompression.

The transcoder obtains (520) re-coding data set elements for the source format compressed video. To obtain (520) the elements, the transcoder parses the source format compressed video before, during, or after decoding (e.g., from a buffered copy). Alternatively, the re-coding data set elements are separately signaled or otherwise provided. The elements are source format syntax elements or elements derived from source format syntax elements, for example, picture type values, intra/inter MB coding type values, and field/frame information. Alternatively, the transcoder obtains other and/or additional elements.

A target format encoder re-compresses (530) the uncompressed video, producing target format compressed video. In doing so, the encoder uses the re-coding data set elements when making coding decisions. The transcoder may also pass on certain elements for parameters in the target format compression. In this way, the encoder roughly follows the quality of the source format compressed video when compressing the video in the target format. The encoder independently makes various other decisions so as to reduce bitrate without penalizing quality. For example, the encoder makes various prediction mode decisions and/or transform size decisions to better adapt encoding to localized patterns, thereby reducing bitrate. Or, the encoder computes new motion vectors for motion compensation with loop filtering, intensity compensation, more motion vectors, and/or increased motion vector precision, so as to improve motion compensated prediction and thereby reduce bitrate for prediction residuals. Motion vector information from the source format compressed video may be used in some motion estimation decisions (e.g., to speed up estimation by providing start points) and ignored in other motion estimation decisions (e.g., to find the exact motion vectors in view of loop filtering, intensity compensation, etc.).

The transcoder may complete the decompression (510) before beginning the re-compression (530). More commonly, the transcoder performs the stages of the technique (500) concurrently for a picture, group of pictures, or other duration of video.

### IV. Mapping Quantization Levels

In some embodiments, a video transcoder maps quantization levels for compressed video in a source format to the compressed video in a target format when transcoding. This mapping establishes the equivalence of the quantizer step size in the source and destination compressed video formats, and helps the transcoder preserve quality and reduce transcoding losses.

Figure 6 shows a technique (600) for obtaining and using quantization levels for source format compressed video during transcoding. A source format decoder decompresses (610) the source format compressed video, producing uncompressed video. For example, the decompression is full decompression.

The transcoder obtains (620) quantization levels for the source format compressed video. To obtain (620) the levels, the transcoder parses the source format compressed video before, during, or after decoding. Alternatively, the levels are separately signaled or otherwise provided. The quantization levels are, for example, per-MB quantization step size values for uniform quantization. Alternatively, the transcoder obtains other and/or additional kinds of quantization levels.

Next, a target format encoder re-compresses (630) the uncompressed video, producing target format compressed video. In doing so, the encoder uses the obtained quantization levels when making quantization decisions. For example, the encoder sets a quantization value for a picture based upon the average of the per-MB quantization step size values for MBs of the corresponding picture in the source format compressed video. Or, the encoder sets a quantization value for a MB based upon a per-MB quantization step size value for a corresponding MB in the source format compressed video. This helps the encoder match the quality of the source format compressed video when compressing in the target format. The encoder can make various other decisions so as to reduce bitrate without penalizing quality, as described in the previous section.

The transcoder may complete the decompression (610) before beginning the re-compression (630). More commonly, the transcoder performs the stages of the technique (600) concurrently for a picture, group of pictures, or other duration of video.

### V. Rate Control in Transcoding

In some embodiments, a video transcoder uses rate control when transcoding. For example, the rate control allows the transcoder to control bitrate to satisfy constant bitrate constraints for Internet streaming or other applications, while staying close to the quality of the source format compressed video.

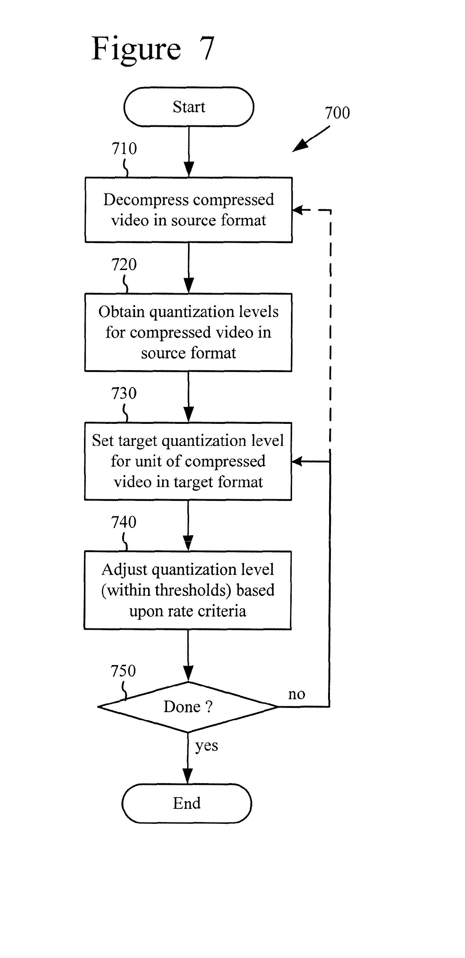

Figure 7 shows a technique (700) for rate control in transcoding. A source format decoder decompresses (710) source format compressed video, producing uncompressed video. For example, the decompression is full decompression. The transcoder obtains (720) quantization levels for the source format compressed video, as described in the previous section. The transcoder sets (730) a target quantization level for a unit of compressed video in the target format. For example, the encoder assigns a quantization level for a picture or MB, as described in the previous section.

The transcoder adjusts (740) the target quantization level (within thresholds) based upon one or more rate criteria. The thresholds prevent the transcoder from deviating too far up or down from the corresponding quantization level(s) of the source format compressed video, which helps keep the quality of the compressed video close between the target and source formats. The rate criteria are based upon buffer fullness levels, deviation between the number of bits allocated for the unit and the number of bits actually used encoding the unit, and/or other factors. The number of bits allocated for the unit may be based on desired bitrate, picture type and/or picture coding complexity, or it may be based on bits used by the same unit in the source compressed format (scaled appropriately). In addition, the encoder can adjust quantization to account to local variations in complexity. Overall, the transcoder coarsens quantization to reduce bitrate towards a goal or makes quantization finer to increase bitrate towards a goal. The transcoder may also attempt to control fluctuations in quality levels while achieving the goal bitrate.

After the quantization level for the unit has been adjusted (740), the transcoder determines (750) whether transcoding is done and, if not, continues by setting (730) the target quantization level for the next unit. The transcoder may complete the decompression (710) before beginning the setting (730) and adjusting (740) for rate control. More commonly, the transcoder performs the stages of the technique (700) concurrently for a picture, group of pictures, or other duration of video.

### VI. Combined Implementations

While the foregoing techniques may be applied independently and separately, they may also be combined in a single, integrated transcoding system. In one implementation, a transcoder translates MPEG-2 video to WMV9 video.

The transcoder considers MPEG-2 syntax and semantic elements and uses a set of rules that allows syntax elements and coding decisions to be maintained between MPEG-2 compression and WMV9 compression. Specifically, the transcoder uses a subset of the MPEG-2 re-coding data set (as described in SMPTE 327M-2000), which is derived from the MPEG-2 video in the decoding sub-system. The transcoder uses the MPEG-2 re-coding data as a starting point in the encoding sub-system, making coding decisions for WMV9 encoding from it and carrying forward certain items to the WMV9 bitstream. Thus, the transcoder preserves or modifies various MPEG-2 coding parameters according to specific needs of the WMV9 encoder and transcoding scenario.

The transcoder addresses the following problem. Given a set of video pictures that have been encoded by MPEG-2, how should the transcoder allocate bits and quality (quantization) when re-encoding the same pictures with WMV9? In the transcoding, the transcoder strives to avoid (or at least significantly reduce) transcoding losses while substantially preserving quality. The transcoder does not expend too many bits to preserve quality that is below perceptibility/visibility thresholds. At the same time, the transcoder exploits the additional compression efficiencies of WMV9 to produce output at bitrates lower than the bitrates of the MPEG-2 compressed input.

The transcoder operates in a single pass, decompressing the MPEG-2 compressed video, collecting re-coding data set elements, and re-compressing the video concurrently in one pass through the video sequence. With sufficient implementation-dependent customizations, the single-pass transcoding can be used in various streaming scenarios, with MPEG-2 input and WMV9 output in real time or close to real time. Alternatively, the transcoder could decompress the entire sequence and store sequence-wide statistics, then start the transcoding. Such multi-pass transcoding may improve quality but requires substantially more computational time, making it hard to implement in a product.

### A. Broadcast and Cable Applications

The quality preserving aspects of the transcoder have implications for the broadcast and cable industries. The transcoder enables effective conversion of existing content from MPEG-2 to WMV9 to take advantage of the efficiencies of WMV9, or simply to allow interoperability between the two formats. The potential applications for seamless MPEG-2 to WMV9 transcoding cover a wide range of scenarios, including production, editing, storage, and consumption. This section focuses mainly on applications for broadcast and cable "verticals," whose business operations span a range of production and distribution activities.

### 1. Content Conversion for VOD and PVR

The predominant model for content consumption used to be a content push model. Today, a content pull model is becoming more common, in which content is delivered after consumers decide what content to watch and when to watch it. Two technologies have facilitated this change. The first is video on demand ["VOD"], and the second is the personal video recorder ["PVR"].

Both VOD and PVR benefit from MPEG-2 to WMV9 transcoding due to savings in bandwidth and storage. VOD and PVR are implemented on a large scale, and the cumulative effect of bandwidth savings can result in large costs savings. With VOD, operators have stretched MPEG-2 compression to the limit for acceptable quality video, so transcoding to another format should avoid any further quality degradation. When the transcoder converts MPEG-2 VOD content to WMV9 format, it reduces bitrate while preserving the quality of the video.

### 2. Content Conversion for Play to Air Video Servers

Video servers routinely ingest and play out video that is stored internally in MPEG-2 format. Assets that are edited are either re-ingested in MPEG-2 or transcoded to MPEG-2 in order to fit into the production chain. The compression efficiencies of WMV9 reduce network bandwidth and storage requirements within a broadcast facility.

The transcoder converts studio-ingested content to WMV9 format at bitrate below the original, while preserving quality. This re-formatted content may be stored with a smaller footprint and transmitted to a playout server with reduced network bandwidth. A broadcast facility may use the WMV9 content for playout to air, air-backup, or disaster recovery from a remote site. In the last case, the cost savings from reduced bitrate are even greater as the video is likely transported over a wide area network.

### 3. Proxy Creation for Content Review

Proxy creation for content review is currently a popular use of WMV9. While MPEG-2 works for contribution and distribution of video within a broadcast facility, it is not inherently a streaming format and scales poorly when applied to lower resolutions and bitrates. A lower rate proxy is needed to review archived content and ingested content that is to play to air.

The transcoder creates lower bitrate and lower resolution WMV9 files that are still at the original frame rate. Time codes from the original video are preserved in the proxy low bitrate video. The transcoder may be used in conjunction with a content player that allows the user to preview the proxy, make cuts and other edits, and create decision lists for edits.

### 4. Content Conversion for Backhaul Delivery

Broadcasters routinely use backhaul delivery to send content to their affiliates for local airing. Content syndicators use backhaul delivery via leased fiber or satellite channels to transmit video to their clients. MPEG-2 is a common intermediary delivery format for these and other intra-facility transfers, with appropriate conditional access decoders. In backhaul applications, even small bitrate gains can result in large cost savings. The intermediate format is transparent, which provides a strong impetus for the adoption of WMV9 as a more efficient delivery format.

### B. Using Picture Coding Types

Both MPEG-2 and WMV9 use three basic picture coding types: intra ["I"], unidirectional predicted ["P"], and bi-directionally predicted ["B"]. There are differences in encoding and decoding these picture types between MPEG-2 and WMV9. WMV9 usually has better compression efficiency, reducing bitrate for the same quality. Accordingly, the goal of transcoding is not to preserve bit allocation per se between the input video stream and the transcoded video stream. The differences in encoding tools between MPEG-2 and WMV9 obviate the need for such rigorous tracking. On the other hand, per-picture and relative bit allocations from the MPEG-2 compressed video may be helpful as a general guide for the WMV9 encoder, as substantially over-allocating bits will not improve picture quality. In fact, use of picture type information to guide coding decisions can significantly improve transcoding efficiency.

Each MPEG-2 picture type has bitrate and quality implications, as there are significant differences in fidelity of the coded picture to the original picture as a function of picture type. An I picture represents a full refresh, which ends propagation of errors in motion compensation, reconstruction, etc. Propagation of transcoding errors is also terminated with a new I picture. I pictures usually consume more bits than other pictures. Thus, inserting an I picture adversely affects bitrate, but tends to improve perceptual quality by lowering propagation errors.

The transcoder matches I picture types between the source format compressed video and target format compressed video in several situations. To improve resiliency against propagation of transcoding errors, transmission errors, or other errors, the transcoder uses I pictures in the target format compressed video. Or, when GOP pattern matching is used (see below), the transcoder matches I picture types. The WMV9 encoder may adjust the exact location of an I picture by a few pictures forward or backward to exploit coding efficiencies specific to the sequence.

A P picture uses forward prediction (from a previous reference picture), while a B picture may use forward and/or backward prediction. Typically, a P picture consumes more bits than a B picture. A P picture may be used as a reference picture for motion compensation. A B picture is not referenced by any other picture, so errors within a B picture are localized.

When bitrate for the target format compressed video is allowed to match the bitrate for the source format compressed video, the transcoder preserves picture coding types for the highest quality transcoding. For transcoding with bitrate reduction, however, such picture type matching may prevent necessary bitrate reduction. The transcoder therefore selectively substitutes P pictures for I pictures in the WMV9 compressed video or reduces the frequency of I pictures. Further bitrate reduction is attained by replacing P pictures with B pictures. The transcoder maps B pictures to B pictures in all transcoding scenarios.

### C. Using Group of Pictures Patterns

A group of pictures ["GOP"] is an arrangement of pictures according to a picture type pattern. A MPEG-2 GOP may consist of an I picture followed by a number ofP pictures as anchors, with B pictures between the anchors, for example, I, B, B, P, B, B, P, B, B, P, B, B. MPEG-2 video streams often use GOP size of 12 frames for film content and 15 frames for television content. Different GOP patterns provide varying levels of support for random access, fast forward, fast reverse, or other access functionality. In contrast, WMV9 video usually has less frequent I pictures, with the default setting inserting an I picture every 10 seconds.

The transcoder may match GOP patterns (in particular, I picture positions) between the input video and transcoded video in various situations. When corresponding random access, fast forward, fast reverse, or other access functionality is required between the source and target format compressed video, the transcoder matches GOP patterns. As a heuristic for quality, matching GOP patterns tends to cause matching bitrate, which tends to cause matching quality. Once I pictures are positioned according to the GOP pattern in the WMV9 video, the P pictures and B pictures may be positioned to coincide with the P and B picture positions in the MPEG-2 video.

### D. Using Frame/Field Coding Decision Information

MPEG-2 allows encoding an entire sequence as frames or as fields. Use of the latter is fairly rare, as field coding modes permitted for frames make up for loss of efficiency when compressing fast moving content. Overall, frame coding outperforms field coding more frequently.

When transcoding field coded pictures, the transcoder lets the internal decision mechanism of the WMV9 encoder determine the field/frame coding type of each MB The transcoder does not automatically enforce field coding. Alternatively, the transcoder matches field/frame coding type decisions at the MB layer or other layer for all picture types. For example, the transcoder forces the WMV9 encoder to use interlaced field pictures when the MPEG-2 compressed video uses field pictures. Matching frame/field picture types in this way is expected to improve transcoding efficiency like other examples of type matching in transcoding.

### E. Using Macroblock Intra/Inter Information

In both MPEG-2 and WMV9, MBs in P pictures and B pictures may be intra coded (without using prediction from reference(s)) or inter coded (using prediction from reference(s)). For example, intra coding is used when motion compensation fails or gives poor results (e.g., large prediction residuals). Motion compensation may fail when a MB includes newly exposed content (such as a new object or newly revealed background) for which there is no good match in the reference picture.

In some implementations, the transcoder preserves intra/inter coding type decisions and selectively re-applies the decisions at the MB layer for non-I pictures in the WMV9 video. One motivation for matching intra coding types at the MB level is that it ensures high quality (at the cost of higher bitrate) for the MB under consideration.

### F. Matching Quantization at the Picture Level

Both MPEG-2 and WMV9 use uniform quantization of transform coefficients. Coefficients are represented similarly in terms of bit precision, the number of allowed quantizer step sizes, and the range of allowed quantizer step sizes. This facilitates the use of quantization as the driving mechanism for matching quality between MPEG-2 video and WMV9 video. By tracking quantization levels between the MPEG-2 compressed video and the WMV9 compressed video, the transcoder guides WMV9 encoding such that neither too few nor too many bits are used. Using a suitable number of bits to compress each picture helps preserve quality and reduce transcoding losses.

In the transcoder, an MPEG-2 parser extracts the quantizer scale for each MB of a given picture in the MPEG-2 video. For picture level quantization of a picture in the WMV9 video, the transcoder averages the MPEG-2 quantization scales of the non-skipped MBs in the picture of the MPEG-2 video. The transcoder uses the average value for the picture level quantizer scale for the WMV9 picture (using the picture level quantizer scale for the MBs within the picture).

If the transcoder uses rate control, the transcoder may adjust the picture level quantizer scale to satisfy the current rate constraints. In any case, the transcoder maintains quantization levels to be within a tolerance of corresponding quantization levels in the MPEG-2 video.

### G. Matching Quantization at the Macroblock Level

Picture level quantizer level control does not provide fine grain quality/rate control. To more closely match quality between the MPEG-2 video and WMV9 video, the transcoder matches quantization at the MB level. WMV9 allows setting of the quantizer scale at the MB level (sometimes called the DQUANT feature).

With DQUANT, the WMV9 encoder may adjust quantization levels for individual MBs. The transcoder causes the WMV9 encoder to use quantization according to the quantizer values for the respective corresponding MBs of the MPEG-2 video. If the transcoder uses rate control, the transcoder may adjust the per MB quantizer levels to satisfy the current rate constraints. Again, in any case, the transcoder maintains quantization levels to be within a tolerance of corresponding quantization levels in the MPEG-2 video..

WMV9 MB skipping decisions are not adjusted. In other words, a MB is not forced to be coded in the WMV9 video just because the corresponding MB was coded in the MPEG-2 video.

### H. Constant Bitrate Rate Control

In many scenarios, the transcoder produces output WMV9 video at a variable bitrate that is below the bitrate of the MPEG-2 input. In other scenarios, the transcoder produces WMV9 output at a fixed or relatively fixed bitrate that is at or below the bitrate of the MPEG-2 input. To achieve this, the transcoder uses rate control on top of the default variable bitrate mode of the WMV9 encoder to help maintain a fixed output bitrate despite varying picture type and scene complexity.

The transcoder may use a three-step process for rate control: (1) target bit allocation, (2) coarse control over quantization based upon virtual buffer criteria, and (3) fine adaptive quantization to adjust quantization values to local variations. The target bit allocation can vary by picture type and picture complexity. For example, I pictures are allocated more bits than P pictures of the same quality, which are allocated more bits than B pictures of the same quality. The extracted picture type values may be used to allocate bits to different pictures. Complex pictures are allocated more bits than simple pictures of the same quality, where complexity is estimated from analysis of content or encoding results.

The transcoder uses feedback from the WMV9 encoder to adjust quantization levels as a function of excess or deficit bits. Specifically, the transcoder scales quantization step size in proportion to the fullness of a rate buffer. This forces the output to conform to the desired rate, while avoiding buffer overflows and underflows. When the output bitrate target is reasonable, the transcoder can still achieve seamless transcoding. The transcoder may also apply psychovisual criteria. As long as constant bitrate constraints for a picture, group of pictures, or other duration of content are satisfied, the transcoder gives the WMV9 encoder the flexibility to allocate bits efficiently within the duration to satisfy quality constraints.

### 1. First CBR Implementation

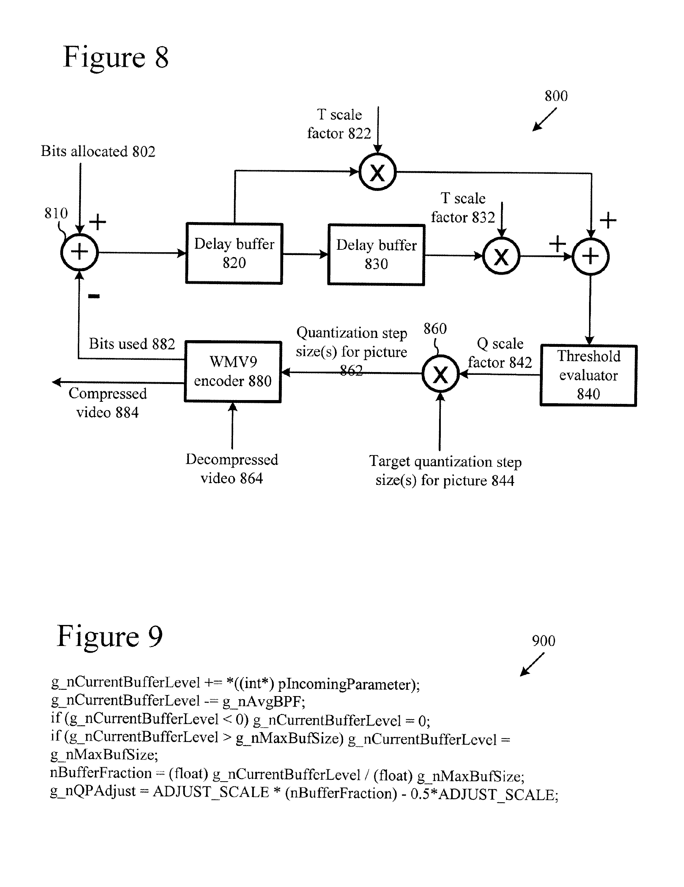

Figure 8 shows a first proportional rate control mechanism (800), which uses weighting according to deviation from target bit allocation. Final bit allocations are expressed in terms of weighted quantizer step size(s) (862) for pictures or MBs to be encoded. The deviation between allocated bits and actual bits used to encode pictures is used to scale the target quantizer step sizes (844), where the target quantizer step sizes (844) are derived from the source format compressed video.

Several strategies are possible for initial bit allocation (802). A simple approach is to allocate bits to each unit based upon the bitrate (bits/sec) divided by frame rate (frames/second). Bit allocation for each unit may also be based on the corresponding number of bits used in the source format, scaled by the ratio of target to source bitrates. Alternatively, the mechanism starts as above but modifies allocation based on the picture type in the target format, while still conforming to the constant bitrate criteria.

The bits actually used (882) to encode a picture are subtracted from the bits allocated (802) for the picture. This yields a deviation between the bits allocated and the bits used. To build a lag effect, deviations from several past pictures are used to affect the quantizer scaling. The deviations are delayed in delay buffers (820, 830) and weighted by threshold scale factors (822, 832). For example, the threshold scale factors are . 5 to give equal weight to the deviations for each of the previous two pictures. Or, more weight is given to the more recent of the two previous pictures (e.g., 7 vs. .3). The weighted deviations are combined and routed to the threshold evaluator (840).

The threshold evaluator (840) receives an adjusted deviation and computes a quantization scale factor (842) to apply to the target quantization step size(s) (844). Though Figure 8 shows the quantization scale factor (842) as a multiplier, the factor (842) may also be expressed in terms of an amount to be added to or subtracted from the target quantization step size(s) (844). The threshold evaluator (840) may limit the magnitude of the scaling to prevent large changes in picture quality from one picture to another.

### 2. Second CBR Implementation

Figure 9 shows pseudocode (900) for part of a second proportional rate control mechanism, which uses weighting according to buffer fullness levels. In this implementation, the target bit allocation g_nAvgBPF is assumed to be constant, equal to the target bitrate divided by frames per second. The term pIncomingParameter represents the total bits consumed by encoding the last picture. These terms adjust g_nCurrentBufferLevel, which is a buffer level of a virtual buffer that is depleted at a constant rate and filled at a varying rate.

The buffer level is limited to the range of 0 to g_nMaxBufSize, which depends on the application. In one case, g_nMaxBufSize is initialized to five seconds of video at the target bitrate. A buffer fullness nBufferFraction is computed by dividing g_nCurrentBufferLevel by g_nMaxBufSize. The buffer fullness determines the amount of scaling in terms of ADJUST_SCALE, which is an experimentally derived value. For example, if ADJUST_SCALE is 20, the quantization scaling factor q_nQPAdjust varies in the range of -10 and 10. If the buffer is half full, nBufferFraction is .5 and q_nQPAdjust is 0. As the buffer approaches a full state, q_nQPAdjust approaches 10, to scale (or increment) the quantization step sizes upward and thereby cause a decrease in bitrate to normalize buffer fullness. On the other hand, as the buffer approaches an empty state, q_nQPAdjust approaches -10, to scale (or decrement) the quantization step sizes downward and thereby cause an increase in bitrate to normalize buffer fullness. In the pseudocode (900) of Figure 9, no weighting beyond the past encoded picture is used.

### I. Miscellaneous Systems Issues

To accrue gains in transcoding, transcoding rules consider various details of the systems context in which the transcoder is used. Some of these details affect picture quality. Others affect the speed and efficiency of implementation.

### 1. Color Sampling

MPEG-2 uses 4:2:0 color sampling for interlaced and progressive pictures. In addition, a separate profile for 4:2:2 color sampling is supported for standard definition video. WMV9 uses 4:2:0 color sampling for both progressive and interlaced video. When transcoding from 4:2:0 MPEG-2 video to 4:2:0 WMV9 video, the transcoder processes decoded video without sample conversions, which helps avoid introducing artifacts outside of the compression stages.

Alternatively, a target format encoder may use another color sampling format, for example, 4:1:1 for interlaced video. If conversion from 4:2:0 sampling to 4:1:1 sampling is necessary, the transcoder up-samples the color components by a factor of two in the vertical direction and performs field-based filtering in the vertical direction to reduce interlace artifacts. The transcoder down-samples the color components in the horizontal direction using standard half-bandwidth filtering. For source video that uses 4:2:2 color sampling, 4:1:1 is the simplest target mode.

When video switches between multiple color sampling modes, the transcoder may simply select and use one color sampling mode to avoid the complexity of dealing with different color sampling processes on a continuing basis. Or, the transcoder may switch color sampling modes on a frame-by-frame or other basis.

The transcoder avoids color space conversions such as those between luminance/chrominance color space and red/green/blue color space. MPEG-2 and WMV9 video both operate in luminance/chrominance space, so color conversion is unnecessary.

### 2. 3:2 Pulldown Pattern

Televisions display NTSC video at approximately 60 fields per second. In contrast, film content is displayed at 24 video frames per second. Telecine conversion processes convert video from television rate to film rate, and inverse telecine processes convert from film to television. Film is often converted to television rate using a 3:2 pulldown pattern, according to which three fields are pulled from the first film frame (e.g., by repeating a field), two fields are pulled from the next film frame, and so on.

For inverse telecine, MPEG-2 allows 3:2 pulldown pattern information in the elementary stream. This allows the display device to display the content at 60 fields per second. Similarly, WMV9 performs inverse telecine detection and processing outside of the elementary decoder. With some versions of WMV, inverse telecine information is signaled in the WMV bitstream. In other versions, however, the syntax of the elementary stream does not include elements for inverse telecine information, so inverse telecine information is passed at the ASF level and extracted and applied by a component of the playback device.

The transcoder handles 24 frames per second film content as follows. The transcoder derives the 3:2 pulldown pattern from the MPEG-2 video as the two flags "top field first" and "repeat first field." One or both of these flags are preserved for each coded frame of video (in the elementary stream or at the ASF level). As a result, breaks in the pattern due to editing or other reasons are preserved. The transcoder re-compresses the frames with the various transcoding rules. At the display device, the content is played out at approximately 60 fields per second using the preserved inverse telecine information. This solution works for pure film content. For mixed film and television content, the transcoder treats the film content as television content to simplify processing.

### 3. Loop Filtering

Loop filtering improves picture quality by smoothing the effects of quantization related blocking artifacts. This makes reference pictures work better for subsequent motion estimation and compensation. Use of loop filtering in WMV9 mitigates compression artifacts from the previous compression cycle, and without loop filtering such artifacts can reduce the effectiveness of subsequent compression. The transcoder allows loop filtering in the WMV9 encoder.

### 4. Quantization Scale and Quantization Matrix

MPEG-2 provides an explicit quantization matrix in the sequence header of the bitstream, to be used for certain picture types. The default quantization matrix in MPEG-2 is non-flat for I pictures and flat for other types of pictures. In contrast, WMV9 uses a flat quantization matrix across all picture types, but offers two variations for the width of the dead zone around 0 for the flat quantization. (Non-flat quantization may still be implemented as an encoder-only process in WMV9.)

For purposes of transcoding, using a finer quantizer scale for intra coded blocks does not appear to improve picture quality, since information lost in prior compression cannot be recovered with finer quantization. So, as a transcoding rule, the WMV9 encoder does not exceed the quantization scale of the corresponding MPEG-2 encoded MB, adjusting for the quantization matrix as appropriate). For non-intra blocks, the quantizer scale used by the WMV9 encoder may reasonably exceed that of the corresponding MPEG-2 MB, since WMV9 supports more complex prediction modes and more precise motion vectors. The transcoder may select between the different dead-zone widths based on desired quality settings to fine tune the quantization.

### 5. MV Mode

MPEG-2 generally provides for one motion vector per MB. For a field-coded MB, one motion vector is generated for each field of the MB WMV9 allows up to four motion vectors per MB, which allows finer grain motion compensation to adapt to localized changes, at the cost of additional bits to signal the motion vectors. The transcoder allows four motion vectors per MB in the WMV9 encoder.

### 6. Fast Integer Transform

MPEG-2 uses standard DCT. WMV9 allows DCT in some modes, but other modes use a fast, integer-based transform that speeds up processing compared to using MPEG-2 style DCT. In terms of quality, the overall performance of the fast, integer-based transform is similar to standard DCT - the fast, integer-based transform does not per se improve quality compared to the DCT.

Due to differences in the transforms, however, the DCT coefficients derived from MPEG-2 video cannot simply be re-used in WMV9. This is not a significant penalty, since WMV9 re-computes transform coefficients anyway after new motion estimation and compensation, and since the fast, integer-based transform has a small penalty on computing time.

### 7. Intensity Compensation

Intensity compensation allows re-mapping of pixels in reference pictures to scale and/or shift pixel values. This can help conserve bits in fade-in and fade-out sequences. Although MPEG-2 does not use intensity compensation, the transcoder allows intensity compensation in the WMV9 encoder

### 8. Variable-size Transform

The WMV9 encoder may use variable-size transforms, which is a significant departure from MPEG-2. Block size of the transform is a parameter that trades off local adaptivity versus coding overhead. When adaptation to local changes is desirable, a smaller transform size is preferable. Appropriate selection of transform size can reduce ringing and other artifacts due to coarse quantization of high frequency transform coefficients for blocks that would otherwise include content boundaries.

### 9. Motion Vector Precision

In MPEG-2, motion vectors are limited to half-pixel precision; quarter-pixel precision motion vectors are allowed in WMV9. Quarter-pixel precision potential provides gains in coding efficiency. While the quality of the MPEG-2 video cannot be improved after prior lossy compression, quarter-pixel precision motion compensation helps preserve the quality at the same or lower bitrate.

### 10. Overlap and Other Prediction Modes

The rich availability of prediction modes in WMV9 for motion vectors, prediction error, and other values differentiates WMV9 from MPEG-2. In general, the transcoder does not limit the selection of these modes in the WMV9 encoder. One exception is for field-encoded MBs. If MPEG-2 video uses field coding of MBs, forcing the WMV9 encoder to adopt the same mode can reduce transcoding losses.

### 11. Long or Extended Range Motion Vectors

Long or extended range motion vectors extend the range of motion vectors in the horizontal and vertical directions for P pictures.

Motion vector information signaled in the MPEG-2 bitstream may be used as a starting point for motion estimation in the WMV9 encoder during transcoding, potentially speeding up the motion estimation process in the WMV9 encoder. With MPEG-2 motion vectors as a guide, the WMV9 encoder may also reduce the size of the motion estimation search area.

### VII. Results

With the preceding techniques, a transcoder achieves high-fidelity conversion from MPEG-2 to WMV9. High-fidelity conversion is extremely important to producers and broadcasters of high-quality video, who will not tolerate lower fidelity representation of previously encoded content. As a point of reference, a PSNR of 45 dB is considered high for transcoding, and the MPEG-2 to WMV9 transcoder frequently exceeds that mark.

A first set of tests compared picture sizes for MPEG-2 video versus WMV9 video transcoded using a naive transcoder. For many pictures of the WMV9 video, the number of bits used was either much higher or much lower than the number of bits used for the corresponding MPEG-2 picture.

A second set of tests compared picture sizes for MPEG-2 video versus WMV9 video transcoded using the improved transcoder. With it, the number of bits used per WMV9 picture was consistently below the number of bits used per MPEG-2 picture, and the peaks and valleys of the overall usage patterns roughly match between the two video sequences.

Subsequent tests compared the quality of naive transcoding and improved transcoding at various bitrates, without rate control. These tests showed substantial and consistent gains for the improved transcoding over naive transcoding for the same MPEG-2 content. For these tests, for I pictures and P pictures, MPEG-2 quantizer scale parameters were matched at the MB level in the WMV9 video. For B pictures, picture level matching was used. Both short (5 second) and long (30 second) sequences were tested. The resulting bitrate for the WMV9 video was approximately 25% lower than the MPEG-2 video on average. For both naive transcoding and improved transcoding, the average PSNR was in excess of 40 dB for the transcoded WMV9 video compared to the MPEG-2 video. Compared to naive transcoding, the improved transcoding was consistently better by 5 dB on average for luminance (1 dB on average for chrominance). This difference corresponds to a bitrate gain of between 10% and 20%, meaning one must use 10% to 20% more bits in naive transcoding to attain quality comparable to the improved transcoding. Viewer testing confirmed these results, with viewers consistently identifying the improved transcoding results as being superior in quality to the naive transcoding results for the same bitrate.

Other tests compared the results of using versus not using transcoding rules for MB coding types. For non-I pictures, the transcoder forced MPEG-2 intra MBs to have corresponding intra MBs in the WMV9 video, but allowed the WMV9 encoder to decide how to code MBs that were inter type in the MPEG-2 video. The transcoder also matched field and frame coding decisions in all picture types. With these rules, the quality of the improved transcoding was still higher than the naive transcoding, but PSNR gains were smaller than without the macroblock type rules. PSNR improvements were between .2 dB and .3 dB on average for luminance (.8 dB for chrominance).

Other tests evaluated proportional rate control in combination with other rules. Output bitrates were found to be within 1% of the target rate parameter, while avoiding buffer overflows and underflows. The quality preserving aspects of the transcoder were defeated if the output bitrate was set to be substantially lower than the bitrate obtained when matching the MPEG-2 quantization levels. Rate control may still be a useful feature, however, for regulating rate and quality. As a rule, the output of the transcoder may be set to a bitrate about 25% lower than the input compressed video to take advantage of the compression efficiencies of the WMV9 encoder while still preserving quality and avoiding transcoding losses.

Having described and illustrated the principles of our invention with reference to described embodiments, it will be recognized that the described embodiments can be modified in arrangement and detail without departing from such principles. It should be understood that the programs, processes, or methods described herein are not related or limited to any particular type of computing environment, unless indicated otherwise. Various types of general purpose or specialized computing environments may be used with or perform operations in accordance with the teachings described herein. Elements of the described embodiments shown in software may be implemented in hardware and vice versa.

In view of the many possible embodiments to which the principles of our invention may be applied, we claim as our invention all such embodiments as may come within the scope and spirit of the following claims and equivalents thereto.

## Claims

1. A method of transcoding video from a source format to a target format at a lower bitrate, the method comprising:
obtaining type values for plural units of compressed video in the source format;
decompressing the compressed video in the source format; and
re-compressing the video to produce compressed video in the target format, including making first coding decisions based at least in part on the obtained type values to help match quality between the respective compressed video in the target and source formats, and further including independently making second coding decisions to make use of compression efficiencies of the target format to reduce bitrate.

2. The method of claim 1 wherein obtaining the type values comprises parsing the compressed video in the source format.

3. The method of claim 1 wherein independently making second coding decisions includes computing new motion vectors for motion compensation, and wherein use of motion vector information from the compressed video in the source format speeds up motion estimation for computing the new motion vectors.

4. The method of claim 3 wherein the motion estimation and compensation use loop filtering and intensity compensation.

5. The method of claim 3 wherein the motion estimation and compensation use up to four motion vectors per macroblock and quarter-pixel motion vector precision.

6. The method of claim 1 wherein independently making second coding decisions includes selecting size of a variable-size frequency transform.

7. The method of claim 1 wherein independently making second coding decisions includes selecting prediction modes for motion vectors or prediction residuals.

8. The method of claim 1 wherein the decompressing comprises fully decompressing the compressed video.

9. The method of claim 1 wherein compression in the source format and compression in the target format use different frequency transforms.

10. The method of claim 1 wherein compression in the source format and compression in the target format use different entropy encoding.

11. A computer-readable medium storing computer-executable instructions for causing a computer system programmed thereby to perform the method of claim 1.

12. The method of claim 1 wherein the plural units are video pictures, and wherein the type values are picture type values that include I picture, P picture, and B picture.

13. The method of claim 1 wherein the bitrate of the compressed video in the target format is equal or below bitrate of the compressed video in the source format on a picture-by-picture basis for substantially all of the one or more video pictures.

14. The method of claim 1 wherein the plural units are macroblocks, and wherein the plural type values are macroblock coding type values.

15. The method of claim 14 wherein the macroblocks include an intra coded macroblock and an inter coded macroblock, and wherein the macroblock coding type values include intra and inter.

16. The method of claim 1 wherein the source format is an MPEG-2 format, and wherein the target format is a WMV9 format.

17. A method of transcoding video from a first format to a second format at a lower bitrate, the method comprising:
obtaining picture type values for plural pictures of compressed video in the first format;
fully decompressing the compressed video in the first format; and
re-compressing the video to produce compressed video in the second format, including making picture type decisions based at least in part on the obtained picture type values, and further including performing motion estimation and compensation to make use of compression efficiencies of the second format to reduce bitrate.

18. The method of claim 17 wherein the motion estimation and compensation in the second format differs from motion estimation and compensation in to the first format in terms of use of loop filtering, number of motion vectors per macroblock, use of intensity compensation, and/or motion vector precision.

19. The method of claim 17 wherein the first format and the second format use different frequency transforms.

20. A computer-readable medium storing computer-executable instructions for causing a computer system programmed thereby to perform the method of claim 17.

21. The method of claim 17 wherein the picture type values include I picture, P picture, and B picture.

22. The method of claim 17 wherein the re-compressing includes using the picture type values to match one or more picture positions between the compressed video in the first format and the compressed video in the second format.

23. The method of claim 17 wherein the re-compressing includes using the picture type values to match group of picture structure between the compressed video in the first format and the compressed video in the second format.

24. A method of transcoding video comprising:
obtaining frame/field information for compressed video in a first format;
fully decompressing the compressed video in the first format; and
re-compressing the video to produce compressed video in a second format different than the first format, including making coding decisions based at least in part on the obtained frame/field information to help match the quality of the compressed video in the second format to the quality of the compressed video in the first format.

25. The method of claim 24 wherein the re-compressing includes setting field/frame types at macroblock level in the compressed video in the second format.

26. The method of claim 24 wherein the re-compressing includes setting field/frame types at picture layer in the compressed video in the second format.

27. The method of claim 24 wherein the compressed video in the second format has a bitrate lower than the bitrate of the compressed video in the first format.

28. The method of claim 24 wherein the re-compressing includes performing motion estimation and compensation to make use of compression efficiencies of the second format to reduce bitrate.

29. A computer-readable medium storing computer-executable instructions for causing a computer system programmed thereby to perform the method of claim 24.

30. A method of transcoding video comprising:
obtaining quantization levels for compressed video in a first format;
decompressing the compressed video in the first format; and
re-compressing the video to produce compressed video in a second format, including setting quantization levels for the compressed video in the second format based at least in part on the obtained quantization levels, wherein compression in the first format and compression in the second format use different frequency transforms.

31. The method of claim 30 wherein compression in the first format uses a DCT and compression in the second format uses a fast integer transform.

32. A computer-readable medium storing computer-executable instructions for causing a computer system programmed thereby to perform the method of claim 30.

33. The method of claim 30 wherein the obtained quantization levels are for macroblocks of the compressed video in the first format.

34. The method of claim 30 wherein the re-compressing comprises setting a quantization level for a video picture of the compressed video in the second format based at least in part upon an average of the obtained quantization levels.

35. The method of claim 30 wherein the re-compressing comprises setting a quantization level for a macroblock of the compressed video in the second format based at least in part upon one of the obtained quantization levels.

36. The method of claim 30 further comprising adjusting the obtained quantization levels for rate control before applying the quantization levels.

37. The method of claim 30 wherein considering the obtained quantization levels helps match the quality of the compressed video in the second format to the quality of the compressed video in the first format.

38. A method of transcoding video comprising:
obtaining per-macroblock quantization levels for plural macroblocks of compressed video in a first format;
decompressing the compressed video in the first format; and
re-compressing the video to produce compressed video in a second format, including setting quantization levels for corresponding macroblocks of the compressed video in the second format based at least in part on the obtained quantization levels.

39. A computer-readable medium storing computer-executable instructions for causing a computer system programmed thereby to perform the method of claim 38.

40. The method of claim 38 wherein the second format uses differential quantization level signaling at the macroblock layer.

41. The method of claim 38 wherein the quantization levels are quantization step sizes.

42. The method of claim 38 further comprising adjusting the obtained quantization levels for rate control before applying the quantization levels.

43. A method of transcoding video comprising:
obtaining quantization levels for compressed video in a first format;
decompressing the compressed video in the first format; and
re-compressing the video to produce compressed video in a second format, including quantizing the compressed video in the second format to a degree comparable to the obtained quantization levels to reduce differences in quality between the respective compressed video in the first and second formats, wherein compression efficiencies of the second format substantially reduce bitrate of the compressed video in the second format compared to the compressed video in the first format.

44. The method of claim 43 including tracking quantization or bitrate at the picture level for the respective compressed video in the first and second formats.

45. The method of claim 43 including tracking quantization or bitrate at the macroblock level for the respective compressed video in the first and second formats.

46. The method of claim 43 wherein the compression efficiencies of the second format reduce bitrate of the compressed video in the second format by at least 20% compared to the compressed video in the first format.

47. The method of claim 43 wherein overall differences in quality between the compressed video in the second format and the compressed video in the first format are below visibility thresholds.

48. The method of claim 43 wherein motion estimation and compensation in the second format differ from motion estimation and compensation in to the first format in terms of use of loop filtering, number of motion vectors per macroblock, use of intensity compensation, and/or motion vector precision.

49. The method of claim 43 wherein compression in the second format uses a variable-size frequency transform.

50. The method of claim 43 wherein compression in the second format and compression in the first format use different prediction modes for motion vectors and/or prediction residuals.

51. The method of claim 43 wherein compression in the second format and compression in the first format use different entropy encoding.

52. A computer-readable medium storing computer-executable instructions for causing a computer system programmed thereby to perform the method of claim 43.

53. A method of transcoding video comprising:
decompressing compressed video in a first format; and
re-compressing the video to produce compressed video in a second format using a second format encoder with default one-pass variable bitrate encoding, including regulating compression parameters of the second format encoder to produce the compressed video in the second format at a constant or relatively constant bitrate by varying quality and bitrate in proportion to one or more rate control criteria.

54. The method of claim 53 wherein the one or more rate control criteria are based at least in part on buffer fullness values.

55. The method of claim 53 wherein the one or more rate control criteria are based at least in part on deviations between allocated bits and used bits for previous video.

56. A computer-readable medium storing computer-executable instructions for causing a computer system programmed thereby to perform the method of claim 53.
